# FASCICULE DE BREVET EUROPEEN

(11) **EP 4 116 762 B1**
(45) Date de publication et mention de la délivrance du brevet: **08.04.2026**
(21) Numéro de dépôt: 22183076.3
(22) Date de dépôt: 05.07.2022
(51) Int. Cl.: G02C 13/00, B24B 9/14

(54) **DISPOSITIF D ASSISTANCE À L ÉLABORATION D'UN VERRE CORRECTEUR DÉFINITIF ET PROCÉDÉ ASSOCIÉ**
VORRICHTUNG ZUR UNTERSTÜTZUNG DER HERSTELLUNG EINES ENDGÜLTIGEN KORREKTURLINSENGLASES UND ENTSPRECHENDES VERFAHREN
DEVICE FOR ASSISTING WITH THE PREPARATION OF A DEFINITIVE CORRECTIVE LENS AND ASSOCIATED METHOD

(30) Priorité: 06.07.2021 FR 2107281
(43) Date de publication de la demande: 11.01.2023
(73) Titulaire: Luneau Technology Operations, 27340 Pont de l'Arche (FR)
(72) Inventeur: VASSARD, Michaël, Marc, Bernard, 76520 BOOS (FR); LEVASSEUR, Baptiste, Louis, 76320 CAUDEBEC LÈS ELBEUF (FR); BIZET, Bruno, Lucien, 27460 IGOVILLE (FR)
(74) Mandataire: Lavoix

(56) Documents cités:
- EP-A2- 1 250 979
- EP-A2- 1 475 187
- DE-A1- 19 804 542
- DE-C1- 19 919 311
- US-A1- 2003 224 701
- US-A1- 2012 314 186
- US-A1- 2017 208 229
- SHAM DICKSON: "CATIA V5R19 Surface modeling ? Glasses", 1 June 2010 (2010-06-01), pages 1 - 70, XP055747699, Retrieved from the Internet <URL:https://vdocument.in/34639016-free-catia-training-tutorial-6-glasses.html> [retrieved on 20201106]

## Description

La présente invention concerne un dispositif d'assistance à l'élaboration d'un verre correcteur définitif comprenant :
- un module d'acquisition de monture configuré pour acquérir des données tridimensionnelles d'une monture, ladite monture étant destinée à accueillir le verre correcteur définitif; et
- un module d'acquisition de verre correcteur configuré pour acquérir des données tridimensionnelles d'un verre correcteur brut, ledit verre correcteur brut étant destiné à l'obtention du verre correcteur définitif.

Dans le domaine de la conception de lunettes, il est d'usage de faire recours à des dispositifs informatiques pour l'élaboration de verres correcteurs. Il est notamment connu d'usiner des verres correcteurs en fonction de la forme d'un contour de monture. La forme du contour de monture consiste en une ligne unidimensionnelle s'étendant sur un plan et correspondant généralement au fond du drageoir de la monture.

Les dispositifs informatiques utilisés permettent de visualiser le contour de monture d'une part et de visualiser/sélectionner des paramètres de découpe pour le verre correcteur d'autre part.

De tels dispositifs ne donnent toutefois pas entière satisfaction. En effet, même si ces dispositifs permettent de définir le contour extérieur du verre correcteur en fonction de la forme du contour de la monture, de tels dispositifs ne permettent pas prédire précisément la position du verre par rapport à la monture une fois que le verre est monté dans la monture. Il est alors nécessaire, suite à l'usinage du verre correcteur, de monter le verre correcteur sur la monture afin de déterminer si le montage du verre correcteur sur la monture est satisfaisant, non seulement par son esthétique mais aussi pour ses propriétés de correction de la vue. Suite à un tel montage, il est parfois nécessaire d'effectuer une nouvelle opération d'usinage, afin d'améliorer l'esthétique et/ou les propriétés de correction de la vue du montage du verre correcteur sur la monture. Dans certains cas, il est nécessaire de recommencer l'usinage sur un nouveau verre, si l'esthétique et/ou les propriétés de correction de la vue ne sont pas satisfaisante et ne peuvent pas être améliorées à partir du verre déjà usiné.

Les dispositifs connus ne permettent alors pas d'assurer une élaboration efficace et économique de verres correcteurs.

Le document EP 1475187 A2 divulgue un dispositif d'assistance à l'élaboration de verres correcteurs.

Un but de l'invention est de proposer un dispositif d'assistance à l'élaboration d'un verre correcteur définitif qui permette une élaboration efficace et économique de verres correcteurs.

A cet effet, l'invention a pour objet un dispositif conforme à la revendication 1.

L'utilisation de données tridimensionnelles d'une surface de la monture destinée à maintenir le verre correcteur définitif sur la monture est particulièrement avantageuse pour permettre de visualiser le positionnement tridimensionnel du verre correcteur définitif par rapport à la monture, notamment dans une direction perpendiculaire au plan dans lequel s'étend le verre correcteur définitif. La visualisation tridimensionnelle du verre correcteur définitif maintenu sur la monture par la coopération de la surface de la monture destinée à maintenir le verre correcteur définitif sur la monture, avec une surface complémentaire du verre correcteur définitif permet alors de déterminer le résultat esthétique et/ou ou les propriétés de correction de la vue du montage du verre correcteur sur la monture avant même l'usinage du verre correcteur brut pour former le verre correcteur définitif.

Suivant d'autres aspects avantageux de l'invention, le dispositif d'assistance à l'élaboration d'un verre correcteur définitif est conforme à l'une quelconque des revendications 2 à 12.

L'invention concerne en outre un procédé d'assistance à l'élaboration d'un verre correcteur définitif conforme à la revendication 13.

L'invention sera mieux comprise à la lecture de la description qui va suivre, donnée uniquement à titre d'exemple non limitatif et faite en se référant aux figures suivantes, dans lesquelles :
[Fig 1] la figure 1 est une représentation schématique d'un dispositif d'assistance à l'élaboration d'un verre correcteur définitif selon l'invention ;
[Fig 2] la figure 2 est une représentation d'une première visualisation tridimensionnelle d'un verre correcteur maintenu sur une monture, générée par le dispositif selon l'invention ;
[Fig 3] la figure 3 est une représentation d'une seconde visualisation tridimensionnelle d'un verre correcteur maintenu sur une monture, générée par le dispositif selon l'invention, et correspondant à une vue en coupe transversale partielle de la représentation de la figure 2 ;
[Fig 4] la figure 4 est une représentation schématique d'un verre correcteur destiné à l'obtention d'un verre correcteur définitif à l'aide du dispositif selon l'invention ; et
[Fig 5] la figure 5 est un organigramme d'un procédé d'assistance à l'élaboration d'un verre correcteur définitif selon l'invention.

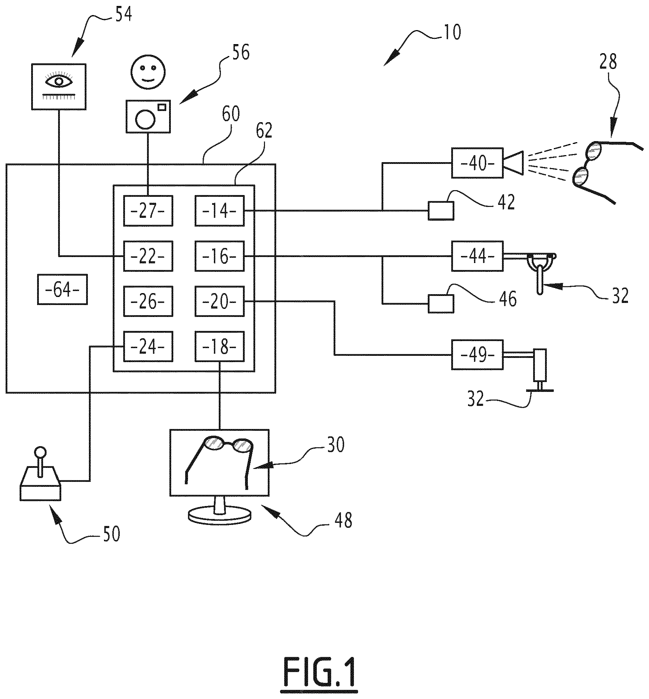

En référence à la figure 1, un dispositif 10 d'assistance à l'élaboration d'un verre correcteur définitif 12 comprend un module 14 d'acquisition de monture, un module 16 d'acquisition de verres correcteurs et un module 18 de génération visuelle.

Dans l'exemple de la figure 1, le dispositif d'assistance 10 comprend en outre avantageusement au moins un module parmi un module 20 de détermination de paramètres d'usinage, un module 22 d'acquisition d'axe pupillaire, un module 24 de commande, un module 26 de mise à jour et un module d'acquisition faciale 27.

Dans une variante non illustrée, le dispositif d'assistance comprend en outre un module d'acquisition de lunette (non illustré) et un module de vérification de montage (non illustré).

Le dispositif d'assistance 10 est configuré pour assister un utilisateur à élaborer un verre correcteur définitif 12.

Le verre correcteur définitif 12 est configuré pour corriger la vue d'un sujet.

On entend par verre correcteur définitif 12 le verre correcteur qui sera installé sur une monture 28 de lunettes 30 pour être utilisé par un sujet et/ou pour corriger la vue dudit sujet. Le verre correcteur définitif 12 est par exemple obtenu à l'aide d'un verre correcteur brut 32. Le verre correcteur définitif 12 est par exemple obtenu par usinage du verre correcteur brut 32.

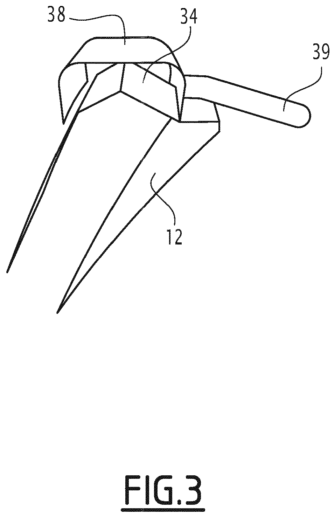

Comme illustré en figure 3, un contour 34 externe du verre correcteur 12 est défini par une surface du verre correcteur définitif 12. En particulier, le contour externe 34 est formé dans la figure 3 en ménageant un biseau pour définir la tranche du verre correcteur définitif 12. En variante ou en complément, le contour 34 est formé en ménageant une rainure (non illustrée) s'étendant sur la tranche du verre correcteur définitif 12. En variante encore, un ou des orifices (non illustré) sont ménagés au travers du verre correcteur 12.

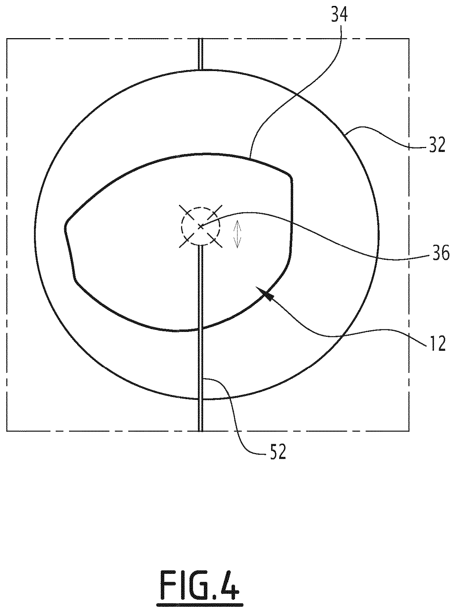

Le verre correcteur brut 32 comprend par exemple un centre optique 36. Dans l'illustration de la figure 4, le centre optique 36 correspond à un foyer optique du verre correcteur brut 32. Dans une variante non illustrée, le centre optique désigne l'ensemble des foyers optiques du verre correcteur brut 32. Suite à l'obtention du verre correcteur définitif 12, le centre optique 36 du verre correcteur brut 32 correspond au centre optique 36 du verre correcteur définitif 12.

Le verre correcteur brut 32 est par exemple une lentille ophtalmologique visible sur la figure 4 présentant un contour extérieur circulaire. Le verre correcteur brut 32 est de dimensions supérieure au verre correcteur définitif 12 pour lequel il sert de base d'usinage.

La monture 28 est destinée à accueillir le verre correcteur définitif 12.

La monture 28 comprend un contour interne 38 défini par une surface de la monture destinée à maintenir le verre correcteur définitif 12 sur la monture 28.

En particulier, le contour interne 38 est formé dans la figure 3 par un drageoir s'étendant dans la tranche de la monture 28. En variante ou en complément, le contour 38 est formé par un cordon (non illustré). La monture comporte également le cas échéant une ou plusieurs vis insérée(s) définissant la surface de la monture destinée à maintenir le verre correcteur définitif 12 sur la monture 28.

Dans la suite de la description, on nomme contour interne 38 la surface de la monture destinée à maintenir le verre correcteur définitif 12 sur la monture 28, que cette surface soit formée par un drageoir, un cordon ou une vis.

La surface du verre correcteur définitif 12 définissant le contour externe 34 est appelée surface complémentaire, et est complémentaire à la surface interne 38. Ainsi, on nomme, dans la suite de la description, contour externe 34, la surface du verre correcteur définitif 12 destinée à être maintenu sur la monture 28, que cette surface soit formée par un biseau, une rainure ou un orifice.

Le module 14 d'acquisition de monture est configuré pour acquérir des données tridimensionnelles de la monture 28. Le module 14 d'acquisition de monture est par exemple configuré pour acquérir un nuage de points représentatif de la monture 28.

Les données tridimensionnelles de la monture 28 comprennent les données tridimensionnelles du contour interne 38 de la monture. Les données tridimensionnelles du contour 38 définissent non seulement la forme du contour 38 de la monture 28 dans l'espace mais définissent en outre le profil dudit contour 38. Les données tridimensionnelles du contour définissent par exemple un modèle d'un drageoir s'étendant dans la tranche de la monture 28 et/ou d'un cordon de la monture 28 et/ou par d'une ou de vis de la monture 28.

Les données tridimensionnelles de la monture 28 comprennent en outre par exemple les données tridimensionnelles d'une face arrière de la monture, destinée à faire face à une face d'un sujet, et d'une face avant de la monture, opposée à la face arrière. Les données tridimensionnelles de la monture 28 comprennent alors des données relatives à la position du contour interne 38 de la monture par rapport aux faces avant et/ou arrière de la monture 28. Les données tridimensionnelles de la monture 28 comprennent alors notamment des données relatives à l'épaisseur de la monture 28.

Les données tridimensionnelles de la monture 28 comprennent également de préférence les données tridimensionnelles d'au moins un patin 39 de la monture, un tel patin de monture 39 étant par exemple représenté en figure 3. Comme visible sur la figure 3, le patin de montre 39 est par exemple un patin en forme de plaquette.

Les données tridimensionnelles de la monture 28 comprennent, dans un mode de réalisation préféré, les données tridimensionnelles de l'ensemble de la monture 28, lesdites données tridimensionnelles comprenant alors par exemple des données tridimensionnelles de branches de la monture 28.

Comme illustré dans la figure 1, le module 14 d'acquisition de monture est par exemple configuré pour être connecté à une unité de mesure de monture 40. Lorsqu'il est connecté à l'unité de mesure de monture 40, le module 14 d'acquisition de monture acquiert les données tridimensionnelles de la monture 28 depuis l'unité de mesure de monture 40.

L'unité de mesure de monture 40 est configurée pour mesurer les données tridimensionnelles de monture 28 sur une monture physique destinée à accueillir le verre correcteur définitif 12. L'unité de mesure de monture 40 est en d'autres termes configurée pour générer les données tridimensionnelles de monture 28 à partir d'une mesure physique sur une monture physique et de transmettre les données tridimensionnelles de monture mesurées au module 14 d'acquisition de monture.

L'unité de mesure de monture 40 est par exemple configurée pour mesurer les données tridimensionnelles de la monture 28 en balayant la monture physique à l'aide d'un faisceau laser ou à l'aide de lumière structurée. L'unité de mesure de monture 40 est en variante, ou en complément, configurée pour mesurer les données tridimensionnelles de la monture 28 à l'aide d'au moins un palpeur physique se déplaçant sur une monture physique. L'unité de mesure de la monture 40 comprend alors par exemple une pince maintenant la monture physique et le palpeur se déplace de préférence au moins le long du contour interne 38 de la monture.

En variante ou en complément, et comme cela est illustré dans la figure 1, le module 14 d'acquisition de monture est configuré pour être connecté à un module 42 de génération de données tridimensionnelles de monture. Lorsqu'il est connecté au module 42 de génération de données de monture, le module 14 d'acquisition de monture acquiert les données tridimensionnelles de la monture 28 depuis le module 42 de génération de données de monture.

Le module 42 de génération de données de monture est configuré pour générer les données tridimensionnelles de monture à partir d'une référence d'une monture destinée à accueillir le verre correcteur définitif 12. Le module 42 de génération de données de monture est en d'autres termes configuré pour générer les données tridimensionnelles sans mesure physique sur une monture physique. Le module de génération de données de monture est par exemple configuré pour interroger un catalogue de montures et pour extraire les données tridimensionnelles de la monture 28 dudit catalogue à partir de la référence de la monture.

Le module 16 d'acquisition de verre correcteur est configuré pour acquérir les données tridimensionnelles du verre correcteur brut 32 et pour obtenir les données tridimensionnelles du verre correcteur définitif 12 après définition d'un contour externe 34 de verre correcteur définitif 12 tel qu'un biseau, qu'une rainure ou que d'un ou de plusieurs trous dans le verre correcteur définitif 12. Le module 16 d'acquisition de verre correcteur est par exemple configuré pour acquérir un nuage de points représentatif du verre correcteur brut 32 et un nuage de points représentatif du verre correcteur définitif 12.

Comme illustré dans la figure 1, le module 16 d'acquisition de verre correcteur est par exemple configuré pour être connecté à une unité de mesure de verre 44. Lorsqu'il est connecté à l'unité de mesure de verre 44, le module 16 d'acquisition de verre correcteur acquiert les données tridimensionnelles du verre correcteur brut 32 depuis l'unité de mesure de verre 44.

L'unité de mesure de mesure de verre 44 est par exemple configurée pour mesurer les données tridimensionnelles du verre correcteur brut 32 à l'aide d'au moins un palpeur physique se déplaçant sur un verre correcteur brut 32 physique. L'unité de mesure de verre 44 comprend alors par exemple un moyen de maintien du verre correcteur brut 32 physique, tel par exemple une pince, et le palpeur se déplace le sur la surface du verre correcteur brut 32 physique.

En variante ou en complément, et comme cela est illustré dans la figure 1, le module 16 d'acquisition de verre est configuré pour être connecté à un module 46 de génération de données de verre. Lorsqu'il est connecté au module 46 de génération de données de verre, le module 16 d'acquisition de verre acquiert les données tridimensionnelles du verre correcteur brut 32 depuis le module 46 de génération de données de verre.

Le module 46 de génération de données de données de verre est configuré pour générer des données de verre correcteur brut 32 à partir de caractéristiques optiques du verre correcteur brut 32 destiné à l'obtention du verre correcteur définitif 12. Les caractéristiques optiques du verre correcteur brut 32 sont par exemple des données obtenues suite à une mesure Shack-Hartmann ou sont obtenues à l'aide d'une prescription optique comprenant par exemple des valeurs de cylindre, de sphère et d'axe du verre correcteur brut 32.

Le module 16 d'acquisition de verre correcteur est configuré pour obtenir, en fonction du contour interne 38 de la monture et des données tridimensionnelles du verre correcteur brut 32, les données tridimensionnelles du verre correcteur définitif 12 et en particulier les données tridimensionnelles du contour externe 34 du verre correcteur définitif 12. Le module 16 d'acquisition de verre correcteur est par exemple en outre configuré pour obtenir les données tridimensionnelles du contour externe 34 du verre correcteur définitif 12 en fonction d'une position désirée du verre correcteur définitif 12 par rapport à la monture 28.

Ces données sont par exemple obtenues en calculant l'intersection entre la forme du contour interne 38 de la monture 28, et la forme du verre correcteur brut 32 à une position choisie du contour interne 38 de la monture par rapport au verre correcteur brut 32.

Les données tridimensionnelles du contour externe 34 du verre correcteur définitif 12 définissent non seulement la forme du contour externe 34 du verre correcteur définitif 12 dans l'espace mais définissent en outre le profil dudit contour externe 34. Les données tridimensionnelles du contour externe 34 définissent par exemple un modèle d'un biseau, d'une rainure ou d'orifices, ainsi que la position sur la tranche du verre définitif 12 du biseau, de la rainure ou de la position des perçages.

Le module 16 d'acquisition de verre correcteur est ainsi configuré pour obtenir, suite à l'obtention des données tridimensionnelles du contour externe 34 du verre correcteur définitif 12, l'ensemble des données tridimensionnelles du verre correcteur définitif 12. Le module 16 d'acquisition de verre correcteur est ainsi configuré pour obtenir des données tridimensionnelles relatives aux faces avant et arrière du verre correcteur définitif 12, à la courbure de ces faces, ou à l'épaisseur du verre correcteur définitif 12.

Le module 18 de génération visuelle est configuré pour générer une visualisation tridimensionnelle du verre correcteur définitif 12 maintenu sur la monture par la coopération du contour interne 38 de la monture 28 avec le contour externe 34 du verre correcteur définitif 12, par exemple conformément à une position désirée du verre correcteur définitif 12 par rapport à la monture 28. Le module de génération visuelle est en d'autres termes configuré pour générer simultanément une visualisation du verre correcteur définitif 12 et de la monture 28 portant le verre correcteur définitif 12.

Le module 18 de génération visuelle est en particulier configuré pour générer la visualisation tridimensionnelle du verre correcteur définitif 12 maintenu sur la monture à l'aide des données tridimensionnelles du contour interne 38 de la monture acquises par le module 14 d'acquisition de monture et des données tridimensionnelles du contour externe 34 du verre correcteur définitif 12 obtenues par le module 16 d'acquisition de verre correcteur. Le module 18 de génération visuelle est configuré pour générer la visualisation tridimensionnelle du verre correcteur définitif 12 à partir de positions de surfaces de la monture 28 et du verre correcteur définitif 12 propres à être affichées et à permettre à l'utilisateur de visualiser les données en trois dimensions sous différents angles d'observation qui peuvent être commandés par l'utilisateur.

Dans un mode de réalisation préféré, le module 18 de génération visuelle est configuré pour calculer, à partir des données tridimensionnelles de la monture 28 et des données tridimensionnelles du verre correcteur définitif 12, les contraintes appliquées par le contour externe 34 du verre correcteur définitif 12 sur le contour interne 38 de la monture 28 et à générer une représentation desdites contraintes appliquées par le contour du verre externe 34 sur le contour interne 38. Le module 18 de génération visuelle est de préférence configuré pour générer la représentation des contraintes sur la visualisation tridimensionnelle du verre correcteur définitif 12 maintenu sur la monture 28 par la coopération du contour externe 38 avec le contour interne 34.

Par exemple, le calcul est effectué sur la base des propriétés mécaniques des matériaux formant la monture et le verre (en particulier le module d'élasticité), en déformant la monture et/ou le verre pour faire coïncider le contour interne 38 de la monture avec le contour externe 34 du verre définitif éventuellement muni du biseau ou de la rainure.

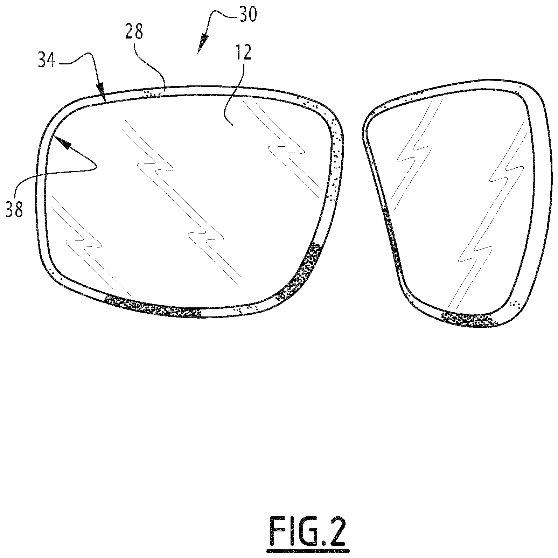

Comme représenté par sur la figure 2, le module 18 de génération est par exemple configuré pour générer la représentation des contraintes par une variation de couleur (ou de motifs comme sur la figure 2) de la visualisation tridimensionnelle de la monture 38. Une région de la monture 28 soumise à une forte contrainte est par exemple de couleur rouge tandis qu'une région soumise à une faible contrainte est par exemple de couleur verte sur la visualisation tridimensionnelle de la monture, l'ensemble des contraintes étant alors représentée sur la visualisation tridimensionnelle de la monture 28 par un gradient de couleur s'étendant du rouge au vert.

Comme illustré en figure 1, le module 18 de génération visuelle est par exemple configuré pour être connecté à un écran d'affichage 48 et à une interface homme-machine. Lorsqu'il est connecté au module 18 de génération visuelle, l'écran d'affichage 48 affiche la visualisation tridimensionnelle générée par le module de génération visuelle 18 sous forme d'une vue en perspective. L'interface homme-machine est apte à être pilotée par l'utilisateur pour faire varier l'angle d'observation notamment en faisant tourner la visualisation de la monture 28 munie de ses verres correcteurs définitifs.

Le module 20 de détermination de paramètres d'usinage, lorsqu'il est présent, est configuré pour déterminer les paramètres d'usinage d'un contour externe 34 de verre correcteur définitif 12 pour l'obtention du verre correcteur définitif 12 à partir verre correcteur brut 32. Le module 20 de détermination de paramètres d'usinage est configuré pour déterminer les paramètres d'usinage en fonction des données tridimensionnelles du contour interne 38 de la monture 28. Le module 20 de détermination de paramètres d'usinage est configuré pour déterminer les paramètres d'usinage du contour externe 34 du verre correcteur définitif 12 pour l'obtention d'un verre correcteur définitif 12 coopérant avec le contour interne 38 de la monture 28 pour que le verre correcteur définitif 12 soit maintenu sur la monture 28.

Le module 20 de détermination de paramètres d'usinage est par exemple connecté à un centre d'usinage 49 et est configuré pour transmettre les paramètres d'usinage au centre d'usinage 49 sous la forme d'instructions d'usinage.

Lorsque les données tridimensionnelles de monture 28 comprennent les données tridimensionnelles d'au moins un patin de monture 39, le module 20 de détermination de paramètres d'usinage est par exemple configuré pour déterminer les paramètres d'usinage du verre correcteur brut 32 pour former le verre correcteur définitif 12 en fonction des données tridimensionnelles du patin de monture 39. Le module 20 de détermination de paramètres d'usinage est par exemple configuré pour déterminer des paramètres d'usinage prévenant une interférence entre le patin de monture 39 et le verre correcteur définitif 12 lorsque le verre correcteur définitif 12 est maintenu sur la monture 28. Comme illustré sur la figure 3, les paramètres d'usinage résultent en un verre correcteur définitif 12 présentant un renfoncement prévenant une interférence avec le patin de monture 28.

Lorsque la monture 28 est configurée pour maintenir le verre correcteur définitif 12 à l'aide de vis, les paramètres d'usinage comprennent des paramètres de perçage. Le module 20 de détermination de paramètres d'usinage est configuré pour déterminer les paramètres de perçage en fonction de données tridimensionnelles de la monture 38 destinée à maintenir le verre correcteur définitif 12 sur la monture 28. Les données tridimensionnelles de la monture 38 comprennent alors par exemple des données tridimensionnelles des vis destinées à maintenir le verre correcteur définitif 12 au travers des orifices issus du perçage. Les paramètres de perçage comprennent par exemple la position du perçage, le diamètre du perçage et l'orientation du perçage.

Le module 18 de génération visuelle est par exemple configuré pour générer une visualisation du verre correcteur définitif résultant d'un usinage selon les paramètres d'usinage déterminées, maintenu sur la monture 28 par la coopération du contour 38 de monture 28 avec le contour 34 de verre correcteur définitif 12.

Le module de commande 24 est propre à permettre à un utilisateur de commander le déplacement de la position du contour du verre correcteur définitif 12 par rapport à la monture 28 sur la visualisation tridimensionnelle du verre correcteur définitif 12 maintenu sur la monture 28.

Le module de commande 24 est par exemple propre permettre à un utilisateur de sélectionner une position désirée du verre correcteur définitif 12 par rapport à la monture 28.

Dans une variante particulière, le module 18 de génération visuelle génère une visualisation tridimensionnelle du verre correcteur définitif 12 maintenu sur la monture 28 en une position prédéterminée et l'utilisateur est apte à déplacer le verre correcteur définitif 12 par rapport à la monture 28 sur la visualisation tridimensionnelle à l'aide du module de commande.

Comme illustré sur la figure 1, le module de commande 24 est par exemple connecté un organe de commande 50 formant une interface homme-machine. L'organe de commande 24 est par exemple formé par une souris et un clavier d'ordinateur.

Le module 18 de génération visuelle est configuré pour générer une visualisation tridimensionnelle du verre correcteur définitif 12 maintenu sur la monture 28 suite au déplacement du verre correcteur définitif 12 par rapport à la monture 28.

Dans le mode de réalisation préféré dans lequel le dispositif comprend un module 26 de mise à jour de données, le module 26 de mise à jour de données est configuré pour mettre à jour les données tridimensionnelles de verre correcteur définitif 12 lorsqu'un utilisateur commande un déplacement du verre correcteur définitif 12 par rapport à la monture 28 sur la visualisation tridimensionnelle du verre correcteur définitif 12 maintenu sur la monture 28. Le module 26 de mise à jour de donnée est configuré pour remplacer les données tridimensionnelles de verre correcteur définitif 12 acquises préalablement au déplacement du verre correcteur 12 par rapport à la monture 28 avec les données tridimensionnelles de verre correcteur définitif 12 permettant le maintien du verre correcteur définitif 12sur la monture conformément à la visualisation tridimensionnelle générée suite au déplacement du verre correcteur définitif 12 par rapport à la monture 28.

Le module de mise à jour 26 met en particulier à jour le contour externe 34 du verre permettant au verre correcteur définitif 12 d'être maintenu dans la monture 28 conformément à la visualisation tridimensionnelle générée suite au déplacement du verre correcteur définitif 12 par rapport à la monture 28. Le contour externe 34 de verre correcteur définitif 12 ainsi mis à jour est donc fonction des données tridimensionnelles du contour interne 38 de la monture 28 et est par exemple utilisé comme base de paramètre d'usinage pour l'obtention d'un verre correcteur définitif 12.

Le module d'acquisition 22 d'une information d'axe pupillaire, lorsqu'il est présent, est configuré pour acquérir la position d'un axe pupillaire 52 d'un sujet destiné à porter les lunettes 30 formées par l'assemblage du verre correcteur définitif 12 et de la monture 28.

Le module d'acquisition 22 d'une information d'axe pupillaire est par exemple configuré pour recevoir l'information d'axe pupillaire depuis un dispositif de mesure d'axe pupillaire 54 tel un pupilomètre.

Lorsque le dispositif 10 comprend un module 22 d'acquisition d'une information d'axe pupillaire, le module 18 de génération visuelle est de préférence configuré pour générer une représentation de l'axe pupillaire. Comme illustré par une flèche sur la figure 4, l'utilisateur du dispositif 10 est par exemple apte à commander le déplacement du verre correcteur définitif 12 par rapport à la monture 28 sur la visualisation tridimensionnelle à l'aide du module 24 de commande, de sorte à aligner l'axe pupillaire 52 au centre optique 36. Le module 26 de mise à jour met par exemple à jour le contour externe 34 du verre pour permettre un maintien du verre correcteur définitif 12 dans la monture 28 tout en permettant l'alignement de l'axe pupillaire 52 avec le centre optique 36. Le module 20 de détermination de paramètres d'usinage détermine alors par exemple les paramètres d'usinage conformément au contour externe 34 de verre définitif 12 mis à jour, le module 20 de détermination de paramètre d'usinage déterminant ainsi les paramètres d'usinage en fonction de l'information d'axe pupillaire 52 et de l'information de centre optique 36. Dans une variante particulière, le module 20 de détermination de paramètre d'usinage détermine les paramètres d'usinage directement en en fonction de l'information d'axe pupillaire 52 et de l'information de centre optique, de sorte à ce que le verre correcteur définitif 12 soit directement usiné pour que l'axe pupillaire 52 traverse le centre optique 36 lorsque le verre correcteur définitif 12 est installé dans la monture 28. Dans une variante particulière, le module de commande 24 est par exemple propre à permettre à un utilisateur de commander le déplacement de la position du contour du verre correcteur définitif 12 par rapport à la monture 28 sur la visualisation tridimensionnelle tout en maintenant le centre optique du verre 36 aligné à l'axe pupillaire 52.

Le module 27 d'acquisition faciale est configuré pour acquérir les données tridimensionnelles de la face d'un sujet. Le module 27 d'acquisition faciale est par exemple configuré pour recevoir des données photographiques et/ou de forme tridimensionnelle de la face du sujet, par exemple depuis un organe d'acquisition faciale tel une caméra vidéo et/ou un scanner tridimensionnel.

Lorsque le dispositif 10 comprend un module 27 d'acquisition faciale, le module de génération visuelle 18 est de préférence configuré pour générer une visualisation tridimensionnelle de la face du sujet portant la monture 28, ladite monture 28 maintenant le verre correcteur définitif 12.

Dans un mode de réalisation particulier, tel que présenté sur la figure 1, le dispositif d'assistance 10 comprend une unité de traitement d'informations 60, formée par exemple d'une mémoire 62 associée à un processeur 64.

Le module 14 d'acquisition de monture, le module 16 d'acquisition de verre correcteur, le module 18 de génération visuelle, et de préférence, le module 20 de détermination de paramètres d'usinage, le module 22 d'acquisition d'axe pupillaire, le module 24 de commande, le module 26 de mise à jour et le module 27 d'acquisition faciale, sont réalisés chacun sous la forme d'un logiciel exécutable par le processeur 64. La mémoire 62 est alors apte à stocker un logiciel d'acquisition de monture, un logiciel d'acquisition de verre correcteur, un logiciel de génération visuelle, et de préférence, un logiciel de détermination de paramètres d'usinage, un logiciel d'acquisition d'axe pupillaire, un logiciel de commande, un logiciel de mise à jour et un logiciel d'acquisition faciale.

En variante, le module 14 d'acquisition de monture, le module 16 d'acquisition de verre correcteur, le module 18 de génération visuelle, et par exemple, le module 20 de détermination de paramètres d'usinage, le module 22 d'acquisition d'axe pupillaire, le module 24 de commande, le module 26 de mise à jour et le module 27 d'acquisition faciale sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*)*.*

Lorsque le module 14 d'acquisition de monture, le module 16 d'acquisition de verre correcteur, le module 18 de génération visuelle, et par exemple, le module 20 de détermination de paramètres d'usinage, le module 22 d'acquisition d'axe pupillaire, le module 24 de commande, le module 26 de mise à jour et le module 27 d'acquisition faciale sont réalisés sous forme d'un ou plusieurs logiciels, c'est-à-dire sous forme d'un programme d'ordinateur, il sont en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

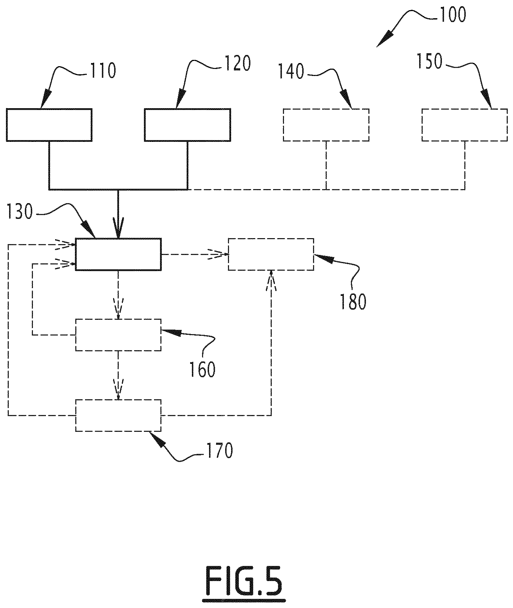

En référence à la figure 5, un procédé 100 d'assistance à l'élaboration d'un verre correcteur définitif 12, destiné à être mis en œuvre par un disposition 10 tel que précédemment décrit, va maintenant être présenté.

Le procédé 100 comprend une étape 110 d'acquisition de données tridimensionnelles d'une monture 28, une étape 120 d'acquisition de données tridimensionnelles d'un verre correcteur brut 32 et d'obtention de données tridimensionnelles d'un verre correcteur définitif 12 et une étape 130 de génération d'une visualisation du verre correcteur maintenu sur la monture par la coopération du contour de monture 28 avec le contour externe 34 du verre correcteur définitif 12.

Dans des variantes qui seront décrites plus bas, le procédé 100 comprend en outre optionnellement une étape 140 d'acquisition d'axe pupillaire, une étape 150 d'acquisition faciale, une étape 160 de commande, une étape 170 de mise à jour et une étape 180 de détermination de paramètres d'usinage.

Lors de l'étape 110 d'acquisition de données tridimensionnelles d'une monture, le module 14 d'acquisition de monture acquiert des données tridimensionnelles de monture 28, par exemple depuis une unité de mesure de monture 40 ou depuis un module de génération de données de monture 42.

Lors de l'étape 120 d'acquisition de données tridimensionnelles, le module 16 d'acquisition de verre correcteur acquiert des données tridimensionnelles de verre correcteur brut 32, par exemple depuis une unité de mesure de verres 44 ou depuis un module de génération de données de verre 46.

Lors de l'étape 120 d'acquisition de données tridimensionnelles, le module 16 d'acquisition de verre correcteur obtient des données tridimensionnelles d'un verre correcteur définitif 12 en fonction de la surface 38 de la monture 28 destinée à maintenir le verre correcteur définitif 12 sur la monture 28 acquise et des données tridimensionnelles du verre correcteur brut 32 acquises.

L'étape 120 d'acquisition de données tridimensionnelles comprend par exemple l'acquisition d'une position désirée du verre correcteur définitif 12 par rapport à la monture 28, l'obtention des données tridimensionnelles d'un verre correcteur définitif 12 dépendant alors de la position désirée du verre correcteur définitif 12 par rapport à la monture 28.

Lors de l'étape 130 de génération d'une visualisation du verre correcteur définitif 12 maintenu sur la monture 28 par la coopération du contour de monture 28 avec le contour externe 34 du verre correcteur définitif 12, le module de génération visuelle 18 génère une visualisation du verre correcteur définitif 12 maintenu sur la monture par la coopération du contour de monture 28 avec le contour externe 34 du verre correcteur définitif 12.

Lors de l'étape 130 de génération d'une visualisation, le module de génération visuelle 18 génère avantageusement une représentation sur la monture 28 des contraintes appliquées par le contour externe 34 du verre correcteur sur le contour interne 38 de la monture.

Des variantes avantageuses du procédé 100 vont désormais être présentées.

L'étape 130 de génération d'une visualisation du verre correcteur définitif 12 maintenu sur la monture 28 est, dans une variante, précédée d'une étape 140 d'acquisition d'axe pupillaire.

Lors d'une telle étape 140 d'acquisition d'axe pupillaire, le module 22 d'acquisition d'axe pupillaire acquiert les axes pupillaires d'un sujet. Lorsque l'étape 140 d'acquisition d'axe pupillaire est effectuée, l'étape 130 de génération d'une visualisation comprend par exemple la génération d'une visualisation de l'axe pupillaire.

L'étape 130 de génération d'une visualisation du verre correcteur définitif 12 maintenu sur la monture 28 est par ailleurs, et encore en variante, précédée d'une étape 150 d'acquisition faciale.

Lors d'une telle étape 150 d'acquisition faciale, le module d'acquisition faciale 27 acquiert des données tridimensionnelles de la face d'un sujet. Lorsque l'étape 150 d'acquisition faciale est effectuée, l'étape 130 de génération d'une visualisation comprend par exemple la génération d'une visualisation de la face du sujet portant la monture 28, ladite monture maintenant le verre correcteur définitif 12.

Lors d'une variante particulière dans le procédé comprend une étape 160 de commande. Lors de l'étape 160 de commande, qui est facultative, l'utilisateur du dispositif 10 commande le déplacement du verre correcteur définitif 12 par rapport à la monture 28 sur la visualisation tridimensionnelle du verre correcteur définitif 12 maintenu sur la monture 28, par l'intermédiaire du module de commande 24.

Lors de l'étape 170 de mise à jour, qui est facultative et qui suit l'étape 160 de commande, le module 26 de mise à jour met à jour les données tridimensionnelles du verre correcteur définitif 12 en remplaçant les données tridimensionnelles de verre correcteur définitif 12 acquises préalablement à l'étape 160 de commande par des données de verre correcteur définitif 12 permettant le maintien du verre correcteur définitif 12 sur la monture 28 conformément à la visualisation tridimensionnelle générée suite au déplacement du verre correcteur définitif 12 par rapport à la monture 28 découlant de l'étape de commande 160.

Lors d'une variante particulière, le procédé comprend une étape 180 de détermination de paramètres d'usinage. Lors d'une telle étape, le module 20 de détermination de paramètres d'usinage détermine des paramètres d'usinage d'un contour du verre correcteur brut 34 pour l'obtention du verre correcteur définitif 12, en fonction des données tridimensionnelles du contour de la monture 28 destinée à maintenir le verre correcteur définitif 12 sur la monture 28. Les paramètres d'usinage correspondent par exemple au contour de verre correcteur définitif 12 mis à jour suite à l'étape de mise à jour 170.

Comme vu plus haut, et dans une variante non représentée, le dispositif 10 comprend un module d'acquisition de lunettes 30 et un module de vérification de montage.

Le module d'acquisition de lunettes 30 est configuré pour acquérir des données tridimensionnelles de lunettes 30 comprenant un verre correcteur définitif 12 et une monture 28 accueillant le verre correcteur définitif 12.

Le module de vérification de montage est configuré pour comparer les données tridimensionnelles de lunettes 30 avec les données tridimensionnelles du verre correcteur définitif 12 maintenu sur la monture 28 par la coopération du contour de monture 38 avec le contour du verre correcteur définitif 12.

Dans cette variante non représentée, le module de génération visuelle est alors configuré pour générer une visualisation représentative d'un résultat de la comparaison des données tridimensionnelles de lunettes 30 avec les données tridimensionnelles du verre correcteur définitif 12 maintenu sur la monture par la coopération du contour de monture 38 avec le contour du verre correcteur définitif 12.

En référence à la figure 5, un procédé 100 d'assistance à l'élaboration d'un verre correcteur définitif 12, destiné à être mis en oeuvre par un disposition 10 tel que précédemment décrit, va maintenant être présenté.

Le procédé 100 comprend une étape 110 d'acquisition de données tridimensionnelles d'une monture 28, une étape 120 d'acquisition de données tridimensionnelles d'un verre correcteur brut 32 et d'obtention de données tridimensionnelles d'un verre correcteur définitif 12 et une étape 130 de génération d'une visualisation du verre correcteur maintenu sur la monture par la coopération du contour de monture 28 avec le contour externe 34 du verre correcteur définitif 12.

Dans des variantes qui seront décrites plus bas, le procédé 100 comprend en outre optionnellement une étape 140 d'acquisition d'axe pupillaire, une étape 150 d'acquisition faciale, une étape 160 de commande, une étape 170 de mise à jour et une étape 180 de détermination de paramètres d'usinage.

Lors de l'étape 110 d'acquisition de données tridimensionnelles d'une monture, le module 14 d'acquisition de monture acquiert des données tridimensionnelles de monture 28, par exemple depuis une unité de mesure de monture 40 ou depuis un module de génération de données de monture 42.

Lors de l'étape 120 d'acquisition de données tridimensionnelles, le module 16 d'acquisition de verre correcteur acquiert des données tridimensionnelles de verre correcteur brut 32, par exemple depuis une unité de mesure de verres 44 ou depuis un module de génération de données de verre 46.

Lors de l'étape 120 d'acquisition de données tridimensionnelles, le module 16 d'acquisition de verre correcteur obtient des données tridimensionnelles d'un verre correcteur définitif 12 en fonction de la surface 38 de la monture 28 destinée à maintenir le verre correcteur définitif 12 sur la monture 28 acquise et des données tridimensionnelles du verre correcteur brut 32 acquises.

L'étape 120 d'acquisition de données tridimensionnelles comprend par exemple l'acquisition d'une position désirée du verre correcteur définitif 12 par rapport à la monture 28, l'obtention des données tridimensionnelles d'un verre correcteur définitif 12 dépendant alors de la position désirée du verre correcteur définitif 12 par rapport à la monture 28.

Lors de l'étape 130 de génération d'une visualisation du verre correcteur définitif 12 maintenu sur la monture 28 par la coopération du contour de monture 28 avec le contour externe 34 du verre correcteur définitif 12, le module de génération visuelle 18 génère une visualisation du verre correcteur définitif 12 maintenu sur la monture par la coopération du contour de monture 28 avec le contour externe 34 du verre correcteur définitif 12.

Lors de l'étape 130 de génération d'une visualisation, le module de génération visuelle 18 génère avantageusement une représentation sur la monture 28 des contraintes appliquées par le contour externe 34 du verre correcteur sur le contour interne 38 de la monture.

L'étape 130 de génération d'une visualisation du verre correcteur définitif 12 maintenu sur la monture 28 est, dans une variante, précédée d'une étape 140 d'acquisition d'axe pupillaire.

Lors d'une telle étape 140 d'acquisition d'axe pupillaire, le module 22 d'acquisition d'axe pupillaire acquiert les axes pupillaires d'un sujet. Lorsque l'étape 140 d'acquisition d'axe pupillaire est effectuée, l'étape 130 de génération d'une visualisation comprend par exemple la génération d'une visualisation de l'axe pupillaire.

L'étape 130 de génération d'une visualisation du verre correcteur définitif 12 maintenu sur la monture 28 est par ailleurs, et encore en variante, précédée d'une étape 150 d'acquisition faciale.

Lors d'une telle étape 150 d'acquisition faciale, le module d'acquisition faciale 27 acquiert des données tridimensionnelles de la face d'un sujet. Lorsque l'étape 150 d'acquisition faciale est effectuée, l'étape 130 de génération d'une visualisation comprend par exemple la génération d'une visualisation de la face du sujet portant la monture 28, ladite monture maintenant le verre correcteur définitif 12.

Selon l'invention le procédé comprend une étape 160 de commande. Lors de l'étape 160 de commande, l'utilisateur du dispositif 10 commande le déplacement du verre correcteur définitif 12 par rapport à la monture 28 sur la visualisation tridimensionnelle du verre correcteur définitif 12 maintenu sur la monture 28, par l'intermédiaire du module de commande 24.

Lors de l'étape 170 de mise à jour, qui suit l'étape 160 de commande, le module 26 de mise à jour met à jour les données tridimensionnelles du verre correcteur définitif 12 en remplaçant les données tridimensionnelles de verre correcteur définitif 12 acquises préalablement à l'étape 160 de commande par des données de verre correcteur définitif 12 permettant le maintien du verre correcteur définitif 12 sur la monture 28 conformément à la visualisation tridimensionnelle générée suite au déplacement du verre correcteur définitif 12 par rapport à la monture 28 découlant de l'étape de commande 160.

Lors d'une variante particulière, le procédé comprend une étape 180 de détermination de paramètres d'usinage. Lors d'une telle étape, le module 20 de détermination de paramètres d'usinage détermine des paramètres d'usinage d'un contour du verre correcteur brut 34 pour l'obtention du verre correcteur définitif 12, en fonction des données tridimensionnelles du contour de la monture 28 destinée à maintenir le verre correcteur définitif 12 sur la monture 28. Les paramètres d'usinage correspondent par exemple au contour de verre correcteur définitif 12 mis à jour suite à l'étape de mise à jour 170.

Comme vu plus haut, et dans une variante non représentée, le dispositif 10 comprend un module d'acquisition de lunettes 30 et un module de vérification de montage.

Le module d'acquisition de lunettes 30 est configuré pour acquérir des données tridimensionnelles de lunettes 30 comprenant un verre correcteur définitif 12 et une monture 28 accueillant le verre correcteur définitif 12.

Le module de vérification de montage est configuré pour comparer les données tridimensionnelles de lunettes 30 avec les données tridimensionnelles du verre correcteur définitif 12 maintenu sur la monture 28 par la coopération du contour de monture 38 avec le contour du verre correcteur définitif 12.

Dans cette variante non représentée, le module de génération visuelle est alors configuré pour générer une visualisation représentative d'un résultat de la comparaison des données tridimensionnelles de lunettes 30 avec les données tridimensionnelles du verre correcteur définitif 12 maintenu sur la monture par la coopération du contour de monture 38 avec le contour du verre correcteur définitif 12.

## Revendications

1. Dispositif (10) d'assistance à l'élaboration d'un verre correcteur définitif (12) comprenant :
- un module d'acquisition de monture (14) configuré pour acquérir des données tridimensionnelles d'une monture (28), ladite monture (28) étant destinée à accueillir le verre correcteur définitif (12);
- un module d'acquisition de verre correcteur (16) configuré pour acquérir des données tridimensionnelles d'un verre correcteur brut (32), ledit verre correcteur brut (32) étant destiné à l'obtention du verre correcteur définitif (12), le verre correcteur définitif 12 étant obtenu par usinage du verre correcteur brut 32;
dans lequel les données tridimensionnelles de la monture (28) comprennent les données tridimensionnelles d'une surface (38) de la monture (28) destinée à maintenir le verre correcteur définitif (12) sur la monture (28), dans lequel
le module (16) d'acquisition de verre correcteur est configuré pour obtenir, en fonction de la surface (38) de la monture (28), destinée à maintenir le verre correcteur définitif (12) sur la monture (28), acquise, et des données tridimensionnelles du verre correcteur brut (32) acquises, des données tridimensionnelles du verre correcteur définitif (12), caractérisé ce que
le dispositif (10) comprend un module de génération visuelle (18), configuré pour générer une visualisation tridimensionnelle du verre correcteur définitif (12) maintenu sur la monture (28) par la coopération de la surface (38) de la monture destinée à maintenir le verre correcteur définitif (12) sur la monture (28), avec une surface complémentaire (34) du verre correcteur définitif (12), en ce que
le dispositif (10) comprend un module de commande (24) propre à permettre à un utilisateur de commander le déplacement du verre correcteur définitif (12) par rapport à la monture (28) sur la visualisation tridimensionnelle, le module de génération visuelle (18) étant configuré pour générer une visualisation tridimensionnelle du verre correcteur (12) maintenu sur la monture (28) suite au déplacement du verre correcteur définitif (12) par rapport à la monture (28), et en ce que
le dispositif (10) comprend un module de mise à jour de données (26), le module de mise à jour de données (26) étant configuré pour mettre à jour les données tridimensionnelles de verre correcteur définitif (12) en replaçant lesdites données tridimensionnelles de verre correcteur définitif (12) précédent la commande du déplacement avec les données tridimensionnelles de verre correcteur définitif (12) permettant le maintien du verre correcteur (12) sur la monture (28) conformément à la visualisation tridimensionnelle générée suite au déplacement du verre correcteur (12) par rapport à la monture (28).

2. Dispositif (10) selon la revendication 1, dans lequel le module d'acquisition de monture (14) est configuré :
- pour être connecté à une unité de mesure de monture (40), l'unité de mesure de monture (40) mesurant les données tridimensionnelles de monture (28) sur une monture physique destinée à accueillir le verre correcteur définitif (12), et/ou
- pour être connecté à un module de génération de données de monture (42), le module de génération de données de monture (42) générant les données tridimensionnelles de monture (28) à partir d'une référence d'une monture (28) destinée à accueillir le verre correcteur définitif (12).

3. Dispositif (10) selon la revendication 1 ou 2, dans lequel le module d'acquisition de verre correcteur (16) est configuré :
- pour être connecté à une unité de mesure de verre (44), l'unité de mesure de verre (44) mesurant les données tridimensionnelles de verre correcteur brut (32) sur un verre correcteur physique destiné à l'obtention du verre correcteur définitif (12) ; et/ou
- pour être connecté à un module de génération de données de verre (46), le module de génération de données de verre (46) générant les données tridimensionnelles de verre correcteur brut (32) à partir de caractéristiques optiques du verre correcteur brut (32) destiné à l'obtention du verre correcteur définitif (12).

4. Dispositif (10) selon l'une quelconque des revendications précédentes, dans lequel le module de génération visuelle (18) est configuré pour calculer, à partir des données tridimensionnelles de la monture (28) et à partir des données tridimensionnelles du verre correcteur brut (32) les contraintes appliquées par du verre correcteur définitif (12) sur la monture (28), et générer une représentation des contraintes appliquées par le verre correcteur définitif (12) sur la monture (38) sur la visualisation tridimensionnelle du verre correcteur définitif (12) maintenu sur la monture (28).

5. Dispositif (10) selon l'une quelconque des revendications précédentes, dans lequel le dispositif (10) comprend un module de détermination de paramètres d'usinage (20), le module de détermination de paramètres d'usinage (20) étant configuré pour déterminer des paramètres d'usinage du verre correcteur brut (34) pour l'obtention du verre correcteur définitif (12), en fonction des données tridimensionnelles de la surface (38) de la monture destinée à maintenir le verre correcteur définitif (12) sur la monture (28).

6. Dispositif (10) selon la revendication 5, dans lequel le module de génération visuelle (18) est configuré pour générer une visualisation du verre correcteur définitif (12) résultant d'un usinage selon les paramètres d'usinage déterminés, maintenu sur la monture (28) par la coopération de la surface (38) de la monture destinée à maintenir le verre correcteur définitif (12) sur la monture (28), avec une surface complémentaire (34) du verre correcteur définitif (12).

7. Dispositif (10) selon la revendication 5 ou 6, dans lequel le dispositif (10) comprend un module (22) d'acquisition d'une information d'axe pupillaire (52) d'un sujet, les données tridimensionnelles de verre correcteur brut (32) comprenant une information de centre optique (36), le module de détermination de paramètres d'usinage (20) déterminant les paramètres d'usinage en fonction de l'information d'axe pupillaire (52) et de l'information de centre optique (36).

8. Dispositif (10) selon l'une quelconque des revendications 5 à 7, dans lequel les données tridimensionnelles de monture (28) comprennent les données tridimensionnelles d'au moins un patin de monture (39), le module de détermination de paramètres d'usinage (20) étant configuré pour déterminer des paramètres d'usinage du verre correcteur brut (32) en fonction des données tridimensionnelles du patin de monture (39), lesdits paramètres d'usinage déterminés prévenant une interférence entre le patin de monture (39) et le verre correcteur définitif (12) lorsque le verre correcteur définitif (12) est maintenu sur la monture (28).

9. Dispositif (10) selon l'une quelconque des revendications 5 à 8, dans lequel les paramètres d'usinage comprennent des paramètres de perçage, le module de détermination de paramètres d'usinage (20) étant configuré pour déterminer les paramètres de perçage en fonction des données tridimensionnelles de la surface (38) de la monture destinée à maintenir le verre correcteur définitif (12) sur la monture (28).

10. Dispositif (10) selon l'une quelconque des revendications précédentes, dans lequel le dispositif (10) comprend :
- un module d'acquisition de lunettes (30), configuré pour acquérir des données tridimensionnelles de lunettes (30) comprenant un verre correcteur définitif (12) et une monture (28) accueillant le verre correcteur définitif (12), et
- un module de vérification de montage, configuré pour comparer les données tridimensionnelles de lunettes (30) avec les données tridimensionnelles du verre correcteur définitif (12) maintenu sur la monture (28) par la coopération de la surface (38) de la monture destinée à maintenir le verre correcteur définitif (12) sur la monture (28), avec la surface complémentaire (34) du verre correcteur définitif (12), le module de génération visuelle (18) étant configuré pour générer une visualisation représentative d'un résultat de la comparaison des données tridimensionnelles de lunettes (30) avec les données tridimensionnelles du verre correcteur définitif (12) maintenu sur la monture (28) par la coopération de la surface (38) de la monture destinée à maintenir le verre correcteur définitif (12) sur la monture (28), avec la surface complémentaire (34) du verre correcteur définitif (12).

11. Dispositif (10) selon l'une quelconque des revendications précédentes, dans lequel le dispositif (10) comprend un module d'acquisition faciale d'un sujet (27), configuré pour acquérir des données tridimensionnelles de la face d'un sujet, le module de génération visuelle (18) étant configuré pour générer une visualisation tridimensionnelle de la face du sujet portant la monture (28), ladite monture (28) maintenant le verre correcteur définitif (12).

12. Dispositif (10) selon l'une quelconque des revendications précédentes dans lequel les données tridimensionnelles de la surface (38) de la monture destinée à maintenir le verre correcteur définitif (12) sur la monture (28) comprennent des données tridimensionnelles d'un drageoir de la monture (28) et/ou des données tridimensionnelles d'un cordon de la monture (28) et/ou des données tridimensionnelles d'une vis de la monture (28).

13. Procédé (100) d'assistance à l'élaboration d'un verre correcteur définitif (12), destiné à être mis en œuvre par un dispositif (10) selon l'une quelconque des revendications 1 à 12, comprenant les étapes suivantes :
- acquisition de données tridimensionnelles d'une monture (28), ladite monture étant destinée à accueillir le verre correcteur définitif (12) ;
- acquisition de données tridimensionnelles d'un verre correcteur brut (32), ledit verre correcteur brut (32) étant destiné à l'obtention du verre correcteur définitif (12);
les données tridimensionnelles de la monture (28) comprenant les données tridimensionnelles d'une surface (38) de la monture (28) destinée à maintenir le verre correcteur définitif (12) sur la monture (28),
le procédé comprenant l'obtention de données tridimensionnelles du verre correcteur définitif (12) en fonction de la surface (38) de la monture (28), destinée à maintenir le verre correcteur définitif (12) sur la monture (28), acquise, et des données tridimensionnelles du verre correcteur brut (32) acquises,
le procédé comprenant une étape de génération d'une visualisation tridimensionnelle du verre correcteur définitif (12) maintenu sur la monture (28) par la coopération de la surface (38) de la monture destinée à maintenir le verre correcteur définitif (12) sur la monture (28), avec une surface complémentaire (34) du verre correcteur définitif (12),
le procédé comprenant une étape de commande du déplacement du verre correcteur définitif (12) par rapport à la monture (28) sur la visualisation tridimensionnelle, le module de génération visuelle (18) étant configuré pour générer une visualisation tridimensionnelle du verre correcteur (12) maintenu sur la monture (28) suite au déplacement du verre correcteur définitif (12) par rapport à la monture (28),
le procédé comprenant une étape de mise à jour de données (26), le module de mise à jour de données (26) étant configuré pour mettre à jour les données tridimensionnelles de verre correcteur définitif (12) en replaçant lesdites données tridimensionnelles de verre correcteur définitif (12) précédent la commande du déplacement avec les données tridimensionnelles de verre correcteur définitif (12) permettant le maintien du verre correcteur (12) sur la monture (28) conformément à la visualisation tridimensionnelle générée suite au déplacement du verre correcteur (12) par rapport à la monture (28).

## Patentansprüche

1. Vorrichtung (10) zum Unterstützen der Herstellung eines definitiven Korrekturglases (12), umfassend:
- ein Gestellerfassungsmodul (14), das konfiguriert ist, um dreidimensionale Daten eines Gestells (28) zu erfassen, wobei das Gestell (28) dazu bestimmt ist, das definitive Korrekturglas (12) aufzunehmen;
- ein Korrekturglaserfassungsmodul (16), das konfiguriert ist, um dreidimensionale Daten eines Roh-Korrekturglases (32) zu erfassen, wobei das Roh-Korrekturglas (32) dazu bestimmt ist, das definitive Korrekturglas (12) zu erlangen, wobei das definitive Korrekturglas (12) durch Bearbeiten des Roh-Korrekturglases 32 erlangt wird;
wobei die dreidimensionalen Daten des Gestells (28) die dreidimensionalen Daten einer Oberfläche (38) des Gestells (28) umfassen, die dazu bestimmt sind, das definitive Korrekturglas (12) an dem Gestell (28) zu halten, wobei
das Korrekturglaserfassungsmodul (16) konfiguriert ist, um abhängig von der erfassten Oberfläche (38) des Gestells (28), die dazu bestimmt ist, das definitive Korrekturglas (12) an dem Gestell (28) zu halten, und den erfassten dreidimensionalen Daten des Roh-Korrekturglases (32) dreidimensionale Daten des definitiven Korrekturglases (12) zu erfassen, **dadurch gekennzeichnet, dass**
die Vorrichtung (10) ein visuelles Erzeugungsmodul (18) umfasst, das konfiguriert ist, eine dreidimensionale Visualisierung des definitiven Korrekturglases (12), das an dem Gestell (28) gehalten wird, durch das Zusammenwirken der Oberfläche (38) des Gestells, die dazu bestimmt ist, das definitive Korrekturglas (12) an dem Gestell (28) zu halten, mit einer komplementären Oberfläche (34) des definitiven Korrekturglases (12) zu erzeugen, dass
die Vorrichtung (10) ein Steuermodul (24) umfasst, das geeignet ist, um einem Benutzer zu ermöglichen, die Bewegung des definitiven Korrekturglases (12) in Bezug auf das Gestell (28) auf der dreidimensionalen Visualisierung zu steuern, wobei das visuelle Erzeugungsmodul (18) konfiguriert ist, um eine dreidimensionale Visualisierung des Korrekturglases (12), das an dem Gestell (28) gehalten wird, infolge der Bewegung des definitiven Korrekturglases (12) in Bezug auf das Gestell (28) zu erzeugen, und dass
die Vorrichtung (10) ein Datenaktualisierungsmodul (26) umfasst, wobei das Datenaktualisierungsmodul (26) konfiguriert ist, um die dreidimensionalen Daten des definitiven Korrekturglases (12) zu aktualisieren, indem es die dreidimensionalen Daten des definitiven Korrekturglases (12) vor der Steuerung der Bewegung durch die dreidimensionalen Daten desselben Korrekturglases (12) ersetzt, die das Halten des Korrekturglases (12) an dem Gestell (28) gemäß der dreidimensionalen Visualisierung ermöglichen, die infolge der Bewegung des Korrekturglases (12) in Bezug auf das Gestell (28) erzeugt wird.

2. Vorrichtung (10) nach Anspruch 1, wobei das Gestellerfassungsmodul (14) zu Folgendem konfiguriert ist:
- mit einer Messeinheit für das Gestell (40) verbunden zu werden, wobei die Messeinheit für das Gestell (40) die dreidimensionalen Daten des Gestells (28) an einem physikalischen Gestell misst, die dazu bestimmt ist, das definitive Korrekturglas (12) aufzunehmen, und/oder
- Gestelldatenerzeugungsmodul (42) verbunden zu werden, wobei das Gestelldatenerzeugungsmodul (42) die dreidimensionalen Daten des Gestells (28) anhand einer Referenz eines Gestells (28) erzeugt, das dazu bestimmt ist, das definitive Korrekturglas (12) aufzunehmen.

3. Vorrichtung (10) nach Anspruch 1 oder 2, wobei das Korrektionsglaserfassungsmodul (16) zu Folgendem konfiguriert ist:
- mit einer Glasmesseinheit (44) verbunden zu werden, wobei die Glasmesseinheit (44) die dreidimensionalen Daten des Roh-Korrekturglases (32) auf einem physikalischen Korrekturglas misst, das zum Erlangen des definitiven Korrekturglases (12) bestimmt ist; und/oder
- mit einem Glasdatenerzeugungsmodul (46) verbunden zu werden, wobei das Glasdatenerzeugungsmodul (46) die dreidimensionalen Daten des Roh-Korrekturglases (32) anhand optischer Eigenschaften des Roh-Korrekturglases (32) erzeugt, das dazu bestimmt ist, das definitive Korrekturglas (12) zu erlangen.

4. Vorrichtung (10) nach einem der vorherigen Ansprüche, wobei das visuelle Erzeugungsmodul (18) konfiguriert ist, um anhand der dreidimensionalen Daten des Gestells (28) und der dreidimensionalen Daten des Roh-Korrekturglases (32) die durch ein definitives Korrekturglas (12) auf das Gestell (28) ausgeübten Spannungen zu berechnen und eine Darstellung der durch das definitive Korrekturglas (12) auf das Gestell (38) ausgeübten Spannungen auf der dreidimensionalen Visualisierung des an dem Gestell (28) gehaltenen definitiven Korrekturglases (12) zu erzeugen.

5. Vorrichtung (10) nach einem der vorherigen Ansprüche, wobei die Vorrichtung (10) ein Bearbeitungsparameterbestimmungsmodul (20) umfasst, wobei das Bearbeitungsparameterbestimmungsmodul (20) konfiguriert ist, um Bearbeitungsparameter des Roh-Korrekturglases (34) zum Erlangen des definitiven Korrekturglases (12) abhängig von den dreidimensionalen Daten der Oberfläche (38) des Gestells zu bestimmen, das dazu bestimmt ist, das definitive Korrekturglas (12) an dem Gestell (28) zu halten.

6. Vorrichtung (10) nach Anspruch 5, wobei das visuelle Erzeugungsmodul (18) konfiguriert ist, um eine Visualisierung des definitiven Korrekturglases (12) zu erzeugen, die aus einer Bearbeitung gemäß den bestimmten Bearbeitungsparametern resultiert und an dem Gestell (28) durch das Zusammenwirken der Oberfläche (38) des Gestells zum Halten des definitiven Korrekturglases (12) an dem Gestell (28) mit einer komplementären Oberfläche (34) des definitiven Korrekturglases (12) gehalten wird.

7. Vorrichtung (10) nach Anspruch 5 oder 6, wobei die Vorrichtung (10) ein Erfassungsmodul (22) von Pupillenachseninformation (52) eines Subjekts umfasst, wobei die dreidimensionalen Daten des Roh-Korrekturglases (32) Informationen der optischen Mitte (36) umfassen, wobei das Bearbeitungsparameterbestimmungsmodul (20) die Bearbeitungsparameter abhängig von den Pupillenachseninformationen (52) und den Informationen der optischen Mitte (36) bestimmt.

8. Vorrichtung (10) nach einem der Ansprüche 5 bis 7, wobei die dreidimensionalen Daten des Gestells (28) die dreidimensionalen Daten mindestens eines Gestellbügels (39) umfassen, wobei das Bearbeitungsparameterbestimmungsmodul (20) konfiguriert ist, um Bearbeitungsparameter für das Roh-Korrekturglas (32) basierend auf den dreidimensionalen Daten des Gestellbügels (39) zu bestimmen, wobei die bestimmten Bearbeitungsparameter eine Interferenz zwischen dem Gestellbügel (39) und dem definitiven Korrekturglas (12) verhindern, wenn das definitive Korrekturglas (12) an dem Gestell (28) gehalten wird.

9. Vorrichtung (10) nach einem der Ansprüche 5 bis 8, wobei die Bearbeitungsparameter Bohrparameter umfassen, wobei das Bearbeitungsparameterbestimmungsmodul (20) konfiguriert ist, um die Bohrparameter anhand der dreidimensionalen Daten der Oberfläche (38) des Gestells zu bestimmen, das dazu bestimmt ist, das definitive Korrekturglas (12) an dem Gestell (28) zu halten.

10. Vorrichtung (10) nach einem der vorherigen Ansprüche, wobei die Vorrichtung (10) Folgendes umfasst:
- ein Brillenerfassungsmodul (30), das konfiguriert ist, um dreidimensionale Daten einer Brille (30) zu erfassen, die ein definitives Korrektionsglas (12) und ein Gestell (28), das das definitive Korrektionsglas (12) aufnimmt, umfasst, und
- ein Montageüberprüfungsmodul, das konfiguriert ist, um die dreidimensionalen Daten der Brille (30) mit den dreidimensionalen Daten des definitiven Korrekturglases (12) zu vergleichen, das an dem Gestell (28) durch das Zusammenwirken der Oberfläche (38) des Gestell zum Halten des definitiven Korrekturglases (12) an der Gestell (28) mit der komplementären Oberfläche (34) des definitiven Korrekturglases (12) gehalten wird, wobei das visuelle Erzeugungsmodul (18) so konfiguriert ist, um eine Visualisierung zu erzeugen, die repräsentativ für ein Resultat des Vergleichs von dreidimensionalen Daten der Brille (30) mit den dreidimensionalen Daten des definitiven Korrekturglases (12), das durch das Zusammenwirken der Oberfläche (38) des Rahmens zum Halten des endgültigen Korrekturglases (12) an dem Rahmen (28) mit der komplementären Oberfläche (34) des endgültigen Korrekturglases (12) an dem Rahmen (28) gehalten wird.

11. Vorrichtung (10) nach einem der vorherigen Ansprüche, wobei die Vorrichtung (10) ein Gesichtserfassungsmodul eines Subjekts (27) umfasst, das konfiguriert ist, um dreidimensionale Daten des Gesichts eines Subjekts zu erfassen, wobei das visuelle Erzeugungsmodul (18) konfiguriert ist, um eine dreidimensionale Visualisierung des Gesichts des Subjekts zu erzeugen, das das Gestell (28) trägt, wobei das Gestell (28) das definitive Korrekturglas (12) hält.

12. Vorrichtung (10) nach einem der vorherigen Ansprüche, wobei die dreidimensionalen Daten der Oberfläche (38) des Gestells zum Halten der endgültigen Korrekturlinse (12) an dem Gestell (28) dreidimensionale Daten eines Abstandshalters des Gestells (28) und/oder dreidimensionale Daten einer Schnur des Gestells (28) und/oder dreidimensionale Daten einer Schraube des Gestells (28) umfassen.

13. Verfahren (100) zum Unterstützen der Herstellung eines definitiven Korrekturglases (12), das von einer Vorrichtung (10) nach einem der Ansprüche 1 bis 12 durchgeführt werden soll, umfassend die folgenden Schritte:
- Erfassen von dreidimensionalen Daten eines Gestells (28), wobei das Gestell dazu bestimmt ist, das definitive Korrekturglas (12) aufzunehmen;
- Erfassen von dreidimensionalen Daten eines Roh-Korrekturglases (32), wobei das Roh-Korrekturglas (32) zum Erlangen des definitiven Korrekturglases (12) bestimmt ist;
die dreidimensionalen Daten des Gestells (28) umfassend die dreidimensionalen Daten einer Oberfläche (38) des Gestells (28), das dazu bestimmt ist, das definitive Korrekturglas (12) an dem Gestell (28) zu halten,
das Verfahren umfassend ein Erlangen von dreidimensionalen Daten des definitiven Korrekturglases (12) abhängig von der erfassten Oberfläche (38) des Gestells (28), das dazu bestimmt ist, das definitive Korrekturglas (12) an dem Gestell (28) zu halten, und den erfassten dreidimensionalen Daten des Roh-Korrekturglases (32),
das Verfahren umfassend einen Schritt eines Erzeugens einer dreidimensionalen Visualisierung des definitiven Korrekturglases (12), das durch Zusammenwirken der Oberfläche (38) des Gestells zum Halten des definitiven Korrekturglases (12) an dem Gestell (28) mit einer komplementären Oberfläche (34) des definitiven Korrekturglases (12) an dem Gestell (28) gehalten wird,
das Verfahren umfassend einen Schritt zum Steuern der Bewegung des definitiven Korrekturglases (12) in Bezug auf das Gestell (28) auf der dreidimensionalen Visualisierung, wobei das visuelle Erzeugungsmodul (18) konfiguriert ist, um eine dreidimensionale Visualisierung des Korrekturglases (12), das an dem Gestell (28) gehalten wird, infolge der Bewegung des definitiven Korrekturglases (12) in Bezug auf das Gestell (28) zu erzeugen,
das Verfahren umfassend einen Datenaktualisierungsschritt (26), wobei das Datenaktualisierungsmodul (26) konfiguriert ist, um die dreidimensionalen Daten des definitiven Korrekturglases (12) zu aktualisieren, indem es die dreidimensionalen Daten des definitiven Korrekturglases (12) vor der Steuerung der Bewegung durch die dreidimensionalen Daten desselben Korrekturglases (12) ersetzt, die das Halten des Korrekturglases (12) an dem Gestell (28) gemäß der dreidimensionalen Visualisierung ermöglichen, die infolge der Bewegung des Korrekturglases (12) in Bezug auf das Gestell (28) erzeugt wird.

## Claims

1. Device (10) for assisting in the production of a final corrective lens (12), comprising:
- a frame acquisition module (14) configured to acquire three-dimensional data of a frame (28), said frame (28) being intended to receive the final corrective lens (12);
- a corrective lens acquisition module (16) configured to acquire three-dimensional data of a raw corrective lens (32), said raw corrective lens (32) being intended to obtain the final corrective lens (12), the final corrective lens (12) being obtained by machining the raw corrective lens (32);
wherein the three-dimensional data of the frame (28) comprises the three-dimensional data of a surface (38) of the frame (28) intended to hold the final corrective lens (12) on the frame (28), wherein
the corrective lens acquisition module (16) is configured to obtain, based on the acquired surface (38) of the frame (28) intended to hold the final corrective lens (12) on the frame (28) and the acquired three-dimensional data of the raw corrective lens (32), three-dimensional data of the final corrective lens (12), **characterised in that**
the device (10) comprises a visualisation generation module (18), configured to generate a three-dimensional visualisation of the final corrective lens (12) held on the frame (28) by the cooperation of the surface (38) of the frame intended to hold the final corrective lens (12) on the frame (28) with a complementary surface (34) of the final corrective lens (12), **in that**
the device (10) comprises a control module (24) configured to allow a user to control the movement of the final corrective lens (12) relative to the frame (28) on the three-dimensional visualisation, the visualisation generation module (18) being configured to generate a three-dimensional visualisation of the corrective lens (12) held on the frame (28) following the movement of the final corrective lens (12) relative to the frame (28), and **in that**
the device (10) comprises a data update module (26), the data update module (26) being configured to update the three-dimensional data of the final corrective lens (12) by replacing the three-dimensional data of the final corrective lens (12) prior to the movement command with the three-dimensional data of the final corrective lens (12) enabling the corrective lens (12) to be held on the frame (28) in accordance with the three-dimensional visualisation generated following the movement of the corrective lens (12) relative to the frame (28).

2. Device (10) according to claim 1, wherein the frame acquisition module (14) is configured:
- to be connected to a frame measurement unit (40), the frame measurement unit (40) measuring the three-dimensional data of the frame (28) on a physical frame intended to receive the final corrective lens (12), and/or
- to be connected to a frame data generation module (42), the frame data generation module (42) generating the three-dimensional data of the frame (28) from a reference of a frame (28) intended to receive the final corrective lens (12).

3. Device (10) according to claim 1 or 2, wherein the corrective lens acquisition module (16) is configured:
- to be connected to a lens measurement unit (44), the lens measurement unit (44) measuring the three-dimensional data of the raw corrective lens (32) on a physical corrective lens intended to obtain the final corrective lens (12); and/or
- to be connected to a lens data generation module (46), the lens data generation module (46) generating the three-dimensional data of the raw corrective lens (32) from optical characteristics of the raw corrective lens (32) intended to obtain the final corrective lens (12).

4. Device (10) according to any one of the preceding claims, wherein the visualisation generation module (18) is configured to calculate, from the three-dimensional data of the frame (28) and from the three-dimensional data of the raw corrective lens (32), the stresses applied by the final corrective lens (12) on the frame (28), and to generate a representation of the stresses applied by the final corrective lens (12) on the frame (28) in the three-dimensional visualisation of the final corrective lens (12) held on the frame (28).

5. Device (10) according to any one of the preceding claims, wherein the device (10) comprises a machining parameter determination module (20), the machining parameter determination module (20) being configured to determine machining parameters of the raw corrective lens (34) for obtaining the final corrective lens (12), based on the three-dimensional data of the surface (38) of the frame intended to hold the final corrective lens (12) on the frame (28).

6. Device (10) according to claim 5, wherein the visualisation generation module (18) is configured to generate a visualisation of the final corrective lens (12) resulting from machining according to the determined machining parameters, held on the frame (28) by the cooperation of the surface (38) of the frame intended to hold the final corrective lens (12) on the frame (28) with a complementary surface (34) of the final corrective lens (12).

7. Device (10) according to claim 5 or 6, wherein the device (10) comprises a module (22) for acquiring pupil axis information (52) of a subject, the three-dimensional data of the raw corrective lens (32) comprising optical centre information (36), the machining parameter determination module (20) determining the machining parameters based on the pupil axis information (52) and the optical centre information (36).

8. Device (10) according to any one of claims 5 to 7, wherein the three-dimensional data of the frame (28) comprise three-dimensional data of at least one frame pad (39), the machining parameter determination module (20) being configured to determine machining parameters of the raw corrective lens (32) based on the three-dimensional data of the frame pad (39), said determined machining parameters preventing interference between the frame pad (39) and the final corrective lens (12) when the final corrective lens (12) is held on the frame (28).

9. Device (10) according to any one of claims 5 to 8, wherein the machining parameters comprise drilling parameters, the machining parameter determination module (20) being configured to determine the drilling parameters based on the three-dimensional data of the surface (38) of the frame intended to hold the final corrective lens (12) on the frame (28).

10. Device (10) according to any one of the preceding claims, wherein the device (10) comprises:
- a glasses acquisition module (30), configured to acquire three-dimensional data of glasses (30) comprising a final corrective lens (12) and a frame (28) holding the final corrective lens (12), and
- a mounting verification module, configured to compare the three-dimensional data of glasses (30) with the three-dimensional data of the final corrective lens (12) held on the frame (28) by the cooperation of the surface (38) of the frame intended to hold the final corrective lens (12) on the frame (28) with the complementary surface (34) of the final corrective lens (12), the visualisation generation module (18) being configured to generate a visualisation representing the result of the comparison of the three-dimensional data of glasses (30) with the three-dimensional data of the final corrective lens (12) held on the frame (28) by the cooperation of the surface (38) of the frame intended to hold the final corrective lens (12) on the frame (28) with the complementary surface (34) of the final corrective lens (12).

11. Device (10) according to any one of the preceding claims, wherein the device (10) comprises a facial acquisition module of a subject (27), configured to acquire three-dimensional data of the face of a subject, the visualisation generation module (18) being configured to generate a three-dimensional visualisation of the subject's face wearing the frame (28), said frame (28) holding the final corrective lens (12).

12. Device (10) according to any one of the preceding claims, wherein the three-dimensional data of the surface (38) of the frame intended to hold the final corrective lens (12) on the frame (28) comprise three-dimensional data of a nose pad of the frame (28) and/or three-dimensional data of a frame rim (28) and/or three-dimensional data of a screw of the frame (28).

13. A method (100) for assisting in the production of a final corrective lens (12), to be implemented by a device (10) according to any one of claims 1 to 12, comprising the following steps:
- acquiring three-dimensional data of a frame (28), said frame being intended to receive the final corrective lens (12);
- acquiring three-dimensional data of a raw corrective lens (32), said raw corrective lens (32) being intended to obtain the final corrective lens (12);
the three-dimensional data of the frame (28) comprising three-dimensional data of a surface (38) of the frame (28) intended to hold the final corrective lens (12) on the frame (28),
the method comprising obtaining three-dimensional data of the final corrective lens (12) based on the acquired surface (38) of the frame (28) intended to hold the final corrective lens (12) on the frame (28), and the acquired three-dimensional data of the raw corrective lens (32),
the method comprising a step of generating a three-dimensional visualisation of the final corrective lens (12) held on the frame (28) by the cooperation of the surface (38) of the frame intended to hold the final corrective lens (12) on the frame (28) with a complementary surface (34) of the final corrective lens (12),
the method comprising a step of controlling the movement of the final corrective lens (12) relative to the frame (28) on the three-dimensional visualisation, the visualisation generation module (18) being configured to generate a three-dimensional visualisation of the corrective lens (12) held on the frame (28) following the movement of the final corrective lens (12) relative to the frame (28),
the method comprising a data update step (26), the data update module (26) being configured to update the three-dimensional data of the final corrective lens (12) by replacing the three-dimensional data of the final corrective lens (12) prior to the movement command with the three-dimensional data of the final corrective lens (12) enabling the lens (12) to be held on the frame (28) in accordance with the three-dimensional visualisation generated following the movement of the corrective lens (12) relative to the frame (28).
